# EUROPÄISCHE PATENTSCHRIFT

(11) **EP 4 281 903 B1**
(45) Veröffentlichungstag und Bekanntmachung des Hinweises auf die Patenterteilung: **05.03.2025**
(21) Anmeldenummer: 22700705.1
(22) Anmeldetag: 19.01.2022
(51) Int. Cl.: G06K 19/04, G06K 19/02, G06K 19/077

(54) **KARTENKÖRPER FÜR EINE CHIPKARTE UND CHIPKARTE**
CARD BODY FOR A CHIP CARD AND CHIP CARD
CORPS DE CARTE POUR CARTE À PUCE ET CARTE À PUCE

(30) Priorität: 22.01.2021 DE 102021000335
(43) Veröffentlichungstag der Anmeldung: 29.11.2023
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2022/025018
(87) Internationale Veröffentlichungsnummer: WO 2022/157003

(56) Entgegenhaltungen:
- US-A1- 2020 257 953
- US-A1- 2020 364 531

## Beschreibung

Die Erfindung betrifft einen Kartenkörper für eine Chipkarte sowie eine Chipkarte umfassend einen Kartenkörper.

Es werden Kartenkörper mit einem metallischen Kern in Form einer metallischen Kernschicht oder eines metallischen Kernelements betrachtet, sowie Karten mit Dual-Interface (DI)-Funktionalität, bei denen der Kartenkörper zum Teil bzw. komplett aus Metall besteht. Die Energiekopplung von DI-Systemen mit einem zwei Spulensystem (SPS) erfolgt durch Metallaufbauten mit einem Spalt, bei dem der Magnet-/Stromfluss in den Metallflächen umgeleitet wird.

Das Chipmodul wird in eine Kavität oder Modulöffnung des Kartenkörpers eingesetzt.

Der Funktionsweise einer solchen Karte besteht darin, dass ein Chipmodul verwendet wird, das selbst eine Spule enthält (Coil On Modul). Diese Spule koppelt auf den Kartenkörper mit einem Metallkern. Diese Kopplung funktioniert nur dann, wenn im Metallkartenkörper ein Schlitz enthalten ist.

Das Kavitätsdesign wird bislang so gewählt, dass aufgrund elektromagnetischer Aspekte eine möglichst große Kavität oder Modulöffnung gewählt wird, um so den Energieeintrag in das Chipmodul zu erhöhen. Dadurch wird jedoch die mechanische Stabilität des Moduls verringert.

Die US 2020/257953 A1 beschreibt eine Smartcard mit mindestens einer kontaktlosen Schnittstelle, beispielsweise mit einem Dual-Interface-Transponderchipmodul mit einem Chip, einer Modulantenne für die kontaktlose Schnittstelle und Kontaktpads für eine Kontaktschnittstelle. Metallschichten können Öffnungen zur Aufnahme des Moduls und Schlitze oder nichtleitende Streifen aufweisen, die sich zu den Öffnungen erstrecken und so Kopplungsrahmen bilden. Ein Kartenkörper für die Smartcard kann aus zwei solchen Metallschichten bestehen, die durch eine Schicht aus nicht leitendem Material getrennt sind. Eine Kartenschicht auf der Vorderseite und eine Kartenschicht auf der Rückseite können den Aufbau mehrerer Kopplungsrahmen für eine Smartcard vervollständigen. Verschiedene Schlitzdesigns werden beschrieben und illustriert. Der Schlitz kann gefüllt sein. Der Schlitz kann verstärkt sein.

Die US 2020/364531 A1 beschreibt eine Transaktionskarte mit einer Metallschicht, einer Öffnung in der Metallschicht für einen Transponderchip und mindestens einer Unterbrechung, die sich von einem Ursprung am Kartenumfang bis zu einem Endpunkt in der Öffnung erstreckt. Die Karte weist einen größeren Biegewiderstand auf als eine Karte mit einer vergleichbaren Diskontinuität, bei der der Endpunkt und der Ursprung im gleichen Abstand von einer Linie liegen, die durch eine erste lange Seite des Kartenumfangs definiert wird, wenn ein oder mehrere Verstärkungsmerkmale fehlen. Zu den Verstärkungsmerkmalen gehören eine Diskontinuität, bei der einer der Endpunkte oder der Ursprung relativ näher an der ersten Längsseite des Kartenumfangs liegt als der andere, eine Vielzahl von Diskontinuitäten, bei denen sich weniger als alle vom Kartenrand zur Öffnung erstrecken, eine selbsttragende, nichtmetallische Schicht, die auf mindestens einer Oberfläche der Karte angeordnet ist, oder eine oder mehrere keramische Verstärkungslaschen, die die Öffnung umgeben.

Aufgabe der vorliegenden Erfindung ist es daher, auch bei kleineren Modulöffnungen einen größeren Energieeintrag in das Chipmodul zu ermöglichen.

Diese Aufgabe wird durch einen Kartenkörper für eine Chipkarte sowie eine Chipkarte umfassend einen Kartenkörper gelöst. Ausgestaltungen und Weiterbildungen der Erfindung sind in den abhängigen Ansprüchen angegeben.

Ein erfindungsgemäßer Kartenkörper für eine Chipkarte, aufweisend eine Modulöffnung zum Aufnehmen eines Chipmoduls mit einer Spule, umfasst eine metallische Schicht mit einem Schlitz, der sich von einer Außenkante der metallischen Schicht zu der Modulöffnung erstreckt, und eine Kunststoffschicht, die auf einer Seite der metallischen Schicht aufgebracht ist. Die Modulöffnung umfasst hierbei ein in der Kunststoffschicht und der metallischen Schicht ausgenommenes Sackloch und einen das Sackloch umgebenden äußeren Bereich, der nur zu einem Teil der Höhe der Kunststoffschicht in dieser ausgenommen ist, wobei in der metallischen Schicht in dem äußeren Bereich mindestens ein weiterer Schlitz vorgesehen ist.

Ein Grundgedanke der vorliegenden Erfindung besteht darin, weitere Schlitze oder Einschnitte in dem äußeren Bereich der Modulöffnung einzubringen. Die weiteren Schlitze bewirken eine Bündelung der magnetischen Feldlinien, eine Reduktion von Wirbelströmen sowie eine verbesserte Kopplung der Windungen der Spule.

In dem äußeren Bereich ist die metallische Schicht vorhanden, so dass eine Ausbildung des magnetischen Flusses um die einzelnen Windungen der Spule und auch die Kopplung zwischen den einzelnen Windungen unterdrückt wird. Während im Bereich des Sacklochs, wo keine metallische Schicht vorhanden ist, eine magnetische Kopplung zwischen den einzelnen Windungen entsteht und somit die Güte der Spule erhöht wird, wird im Bereich des Metallkörpers die Kopplung unterdrückt. Die Ausbildung des magnetischen Flusses ist zudem gestaucht und der magnetische Fluss erzeugt zudem Wirbelströme im Metallkörper. Dies bedeutet, dass die von der Chipkarte aufgenommene Energie zu einem erheblichen Teil durch die erzeugten Wirbelströme verloren geht.

Durch den oder die weiteren Schlitze ergibt sich nun die Möglichkeit, eine kleine Modulöffnung vorzusehen, damit das Modul stabil im Kartenkörper ist, aber dennoch einen für die kleine Modulöffnung hohen Energieeintrag zu realisieren. Je größer der Energieeintrag ist, desto besser ist die Performance der Chipkarte.

Dies hat den Vorteil, dass die mechanische Stabilität erhöht wird und dennoch der Energieeintrag hochgehalten werden kann. Der oder die weiteren Schlitze in den Eckbereichen der Modulöffnung vergrößern gewissermaßen die elektrisch aktive Fläche zur Energieübertragung. Gleichzeitig wird aber die Modulöffnung nicht vollflächig vergrößert, so dass die mechanische Stabilität der kleineren Modulöffnung erhalten bleibt. Zusammengefasst ermöglichen der oder die weiteren Schlitze in den Eckbereichen der Modulöffnung das mechanische Design einer kleineren Modulöffnung mit dem elektrischen Energieeintrag einer größeren Modulöffnung.

Da erfindungsgemäß die Energieeinkopplung in die Metallkarte wesentlich verbessert ist, steigt die Performance in der Chipkarte. Durch die weiteren Schlitze ergibt sich eine Reduzierung der Wirbelströme und eine Feldoptimierung des magnetischen Felds. Dadurch wird zum einen ein schneller Aufbau der magnetischen Feldstärke an einer Spule des Chipmoduls ermöglicht, was einen schnelleren Start des Chips oder des Prozessors erlaubt. Zum anderen wird eine höhere magnetische Feldstärke an einer Spule des Chipmoduls ermöglicht, was einen schnelleren Betrieb infolge einer höheren Betriebsfrequenz des Chips oder des Prozessors erlaubt.

Der Begriff "weitere Schlitze" dient zur begrifflichen Abgrenzung dieser weiteren Schlitze in dem äußeren Bereich der Modulöffnung gegenüber dem Schlitz im Metallkern, der zur Begrenzung von Wirbelströmen dient. Im Folgenden werden diese weiteren Schlitze in Form von Eckschlitzen und Parallelschlitzen beschrieben.

Es ist vorgesehen, dass sich mindestens ein Eckschlitz in einem Schlitzbereich des äußeren Bereichs von einem Eckbereich des Sacklochs ausgehend erstreckt. Diese von den Ecken ausgehenden Schlitze ermöglichen die zuvor beschriebenen Effekte der Feldoptimierung. Es können ein bis vier Eckschlitze vorgesehen sein, wobei sich jeder weitere Schlitz von einem anderen Eckbereich der Modulöffnung in die metallische Schicht erstreckt. Bereits mit einem Schlitz kann der Energieeintrag gesteigert werden. Mit vier vorzugsweise symmetrisch angeordneten Schlitzen kann der Energieeintrag weiter gesteigert werden.

Es kann ferner vorgesehen sein, dass der mindestens eine Eckschlitz sich in einem Winkel von 45° zu einem Rand der Modulöffnung erstreckt. Es hat sich gezeigt, dass dieser Winkel einen guten Energieeintrag in Relation zu der Schlitzlänge bietet.

Es kann vorgesehen sein, dass der mindestens eine Eckschlitz eine Länge von 1 mm bis 2 mm aufweist. Bei Messungen hat sich gezeigt, dass bei derartigen Längen ein guter Energieeintrag realisiert werden kann.

Es ist vorgesehen, dass sich mindestens ein Parallelschlitz in einem Schlitzbereich des äußeren Bereichs parallel zu einer Wand des Sacklochs erstreckt. Diese parallel zu dem Umfang oder den Wänden des Sacklochs oder der Modulöffnung verlaufenden Schlitze ermöglichen die zuvor beschriebenen Effekte der Feldoptimierung. Es können ein bis vier Parallelschlitze vorgesehen sein, wobei sich jeder weitere Schlitz bei einem anderen Wandbereich der Modulöffnung in der metallischen Schicht erstreckt. Bereits mit einem Schlitz kann der Energieeintrag gesteigert werden. Mit vier vorzugsweise symmetrisch angeordneten Schlitzen kann der Energieeintrag weiter gesteigert werden.

Es kann ferner vorgesehen sein, dass eine Länge des mindestens einen Parallelschlitzes mindestens der Länge einer Wand des Sacklochs entspricht. Es hat sich gezeigt, dass dieser Zusammenhang zwischen Schlitzlänge und Seitenlänge des Sacklochs einen guten Energieeintrag bietet.

Es kann vorgesehen sein, dass ein Abstand des mindestens einen Parallelschlitzes zu einer Wand des Sacklochs zwischen 0,8 mm und 1 mm beträgt. Es hat sich gezeigt, dass dieser Abstand einen guten Energieeintrag in Relation zu der Schlitzlänge bietet.

Es kann ferner vorgesehen sein, dass auf einer der einen Seite gegenüberliegenden zweiten Seite der metallischen Schicht eine weitere Kunststoffschicht aufgebracht ist und dass sich der innere Bereich der Modulöffnung in die weitere Kunststoffschicht erstreckt. Somit ist die metallische Schicht oder der metallische Kern im Bereich der Modulöffnung vollständig durchbrochen, was die elektrischen Verhältnisse, insbesondere die Energieübertragung, verbessert.

Es kann vorgesehen sein, dass der Schlitzbereich des äußeren Bereichs und ein ungeschlitzter Bereich des äußeren Bereichs gleich groß sind. Diese symmetrische Anordnung der beiden Bereiche hat sich wirkungsvoll für einen guten Energieeintrag erwiesen.

Eine erfindungsgemäße Chipkarte umfasst einen Kartenkörper wie zuvor beschrieben und ein zumindest teilweise in die Modulöffnung des Kartenkörpers eingebettetes Chipmodul mit einer Spule. Es gelten die gleichen Vorteile und Modifikationen wie zuvor beschrieben.

Es kann vorgesehen sein, dass das Chipmodul einen die Spule tragenden Grundkörper aufweist und dass der Grundkörper in dem äußeren Bereich der Modulöffnung auf der Kunststoffschicht aufliegt. So kann auf einfache Weise ein direkter elektrischer Kontakt zwischen dem Chipmodul und der metallischen Schicht vermieden werden. Das Chipmodul und der Kartenkörper kommunizieren lediglich über die Spulen miteinander.

Es kann ferner vorgesehen sein, dass der Schlitzbereich des äußeren Bereichs und ein ungeschlitzter Bereich des äußeren Bereichs gleich groß sind und dass die Spule das Sackloch der Modulöffnung, den Schlitzbereich des äußeren Bereichs und den ungeschlitzten Bereich des äußeren Bereichs der Modulöffnung zu jeweils einem Drittel überdeckt. Somit können 2/3 der Windungen der Spule des Chipmoduls für den Energieeintrag genutzt werden. Gleichzeitig können 2/3 einer Auflagefläche des Chipmoduls für eine mechanische Verbindung genutzt werden. Der Schlitzbereich wird doppelt genutzt, nämlich elektrisch für den Energieeintrag und mechanisch für eine stabile Lagerung des Chipmoduls.

Die vorliegende Erfindung wird nachfolgend mit Bezug auf die beiliegenden Zeichnungen beispielhaft beschrieben.
- Fig. 1:: eine Schnittdarstellung einer Chipkarte mit Kartenkörper und Chipmodul;
- Fig. 2:: eine Draufsicht eines Kartenkörpers für eine Chipkarte;
- Fig. 3:: eine untere Ansicht eines Chipmoduls; und
- Fig. 4:: eine schematische Darstellung des magnetischen Flusses in einem Bereich des Chipmoduls; und
- Fig. 5:: ein Detail der Modulöffnung der Schnittdarstellung der Chipkarte aus Figur 1.

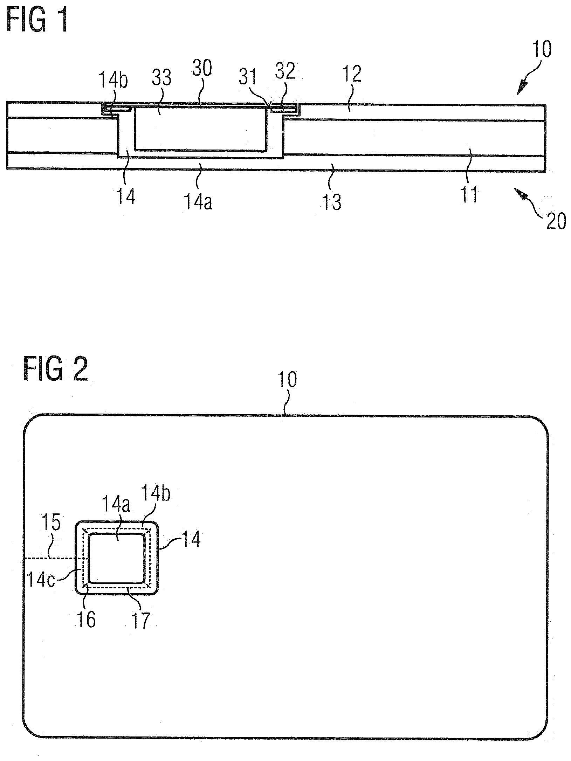

Fig. 1 zeigt einen Kartenkörper 10 für eine Chipkarte 20. Die Chipkarte 20 umfasst hier den Kartenkörper 10 sowie ein Chipmodul 30.

Der Kartenkörper 10 umfasst eine metallische Schicht 11, zum Beispiel in Form eines Kerns oder einer Schicht aus einer Edelstahllegierung mit einer Dicke von 400 µm.

Eine Hauptseite oder Oberfläche des Kartenkörpers 10 ist mit einer Kunststoffschicht 12 bedeckt oder laminiert. Eine gegenüberliegende zweite Hauptseite oder Oberfläche des Kartenkörpers 10 ist mit einer weiteren Kunststoffschicht 13 bedeckt oder laminiert. Die beiden Kunststoffschichten 12, 13 können zum Beispiel aus PET, PC, PVC oder PP bestehen und eine Dicke von 200 µm haben. Die Dicke des Kartenkörpers 10 sollte die maximale Dicke eines Chipkartenkörpers gemäß ISO 7810 nicht übersteigen.

Eine Modulöffnung 14 ist in der Hauptseite oder Oberfläche des Kartenkörpers 10 ausgenommen. Die Modulöffnung 14 erstreckt sich durch die gesamte Kunststoffschicht 12, die gesamte metallische Schicht 11 sowie einen Teil der Kunststoffschicht 13. Die Modulöffnung 14 wird beispielsweise mittels eines Laserarbeitsganges oder Fräsarbeitsganges erstellt.

Die Modulöffnung 14 hat einen in der Kunststoffschicht 12 und der metallischen Schicht 11 ausgenommenes Sackloch 14a und einen das Sackloch 14a umgebenden äußeren Bereich 14b, der nur zu einem Teil der Höhe der Kunststoffschicht 12 in dieser ausgenommen ist.

Das Chipmodul 30 ist in der Modulöffnung 14 angeordnet und dort zum Beispiel verklebt. Das Chipmodul 30 umfasst einen Grundkörper 31, der die Spule 32 trägt. Der Grundkörper 31 liegt in dem äußeren Bereich 14b der Modulöffnung 14 auf der Kunststoffschicht 12 auf.

Das Chipmodul 30 umfasst ferner einen Chip 33, der zum Beispiel in einer Vergussmasse an einer Unterseite des Grundkörpers 31 befestigt ist. Über die Spule 32 wird der Chip 33 mit Energie und/oder Signalen versorgt. So kann ein aus der metallischen Schicht 11 austretendes elektromagnetisches Feld in die Spule 32 eingekoppelt werden.

In Fig. 2 ist ein Kartenkörper 10 in Draufsicht dargestellt. In der metallischen Schicht 11 ist ein Schlitz 15 vorgesehen, der sich von einer Außenkante der metallischen Schicht 11 zu der Modulöffnung 14 erstreckt. In der Figur 2 ist der Schlitz 15 auf einer linken Seite dargestellt, der Schlitz 15 kann auch an einer rechten Seite des Kartenkörpers 10 angeordnet sein. Der Schlitz 15 dient zur Vermeidung von Wirbelströmen.

Der Schlitz 15 hat zum Beispiel eine Breite zwischen 30 µm und 100 µm, bevorzugt zwischen 50 µm und 80 µm. Der Schlitz 15 dient zur Verhinderung von Wirbelströmen in der Umgebung der Modulöffnung 14 und ist daher in der metallischen Schicht 11 ausgebildet. Der Schlitz 15 wird üblicherweise in der metallischen Schicht 11 ausgebildet, bevor dieser mit den Kunststoffschichten 12 und 13 laminiert wird. Daher ist es üblich, dass der Schlitz 15 lediglich in der metallischen Schicht 11 verläuft und nicht in den Kunststoffschichten 12 und 13.

In der metallischen Schicht 11 ist mindestens ein Eckschlitz 16 vorgesehen, der sich ausgehend von einem Eckbereich des Sacklochs 14a in einen Schlitzbereich 14c des äußeren Bereichs 14b hinein erstreckt. In diesem Beispiel sind vier Eckschlitze 16 vorgesehen, die sich jeweils in einem Winkel von 45° zu einem Rand der Modulöffnung 14 erstrecken. Jeder der Eckschlitze 16 hat eine Länge von 1 mm bis 2 mm.

In der metallischen Schicht 11 ist weiter mindestens ein Parallelschlitz 17 in einem Schlitzbereich 14c des äußeren Bereichs 14b vorgesehen, der sich parallel zu einer Wand des Sacklochs 14a erstreckt. Eine Länge des Parallelschlitzes 17 entspricht mindestens der Länge einer Wand des Sacklochs 14a. Der Abstand des Parallelschlitzes 17 zu einer Wand des Sacklochs 14a beträgt zwischen 0,8 mm und 1 mm. In diesem Beispiel sind vier Parallelschlitze 17 vorgesehen, die jeweils parallel zu einer der vier Wände des Sacklochs 14a verlaufen.

Die einzelnen Parallelschlitze 17 und Eckschlitze 16 sind getrennt voneinander ausgebildet, so dass sie außerhalb des Sacklochs 14a keine Verbindung miteinander haben. Die Parallelschlitze 17 und Eckschlitze 16 können in jeder Kombination ausgebildet sein. So ist es möglich, nur Parallelschlitze 17, nur Eckschlitze 16 oder beide Schlitzarten vorhanden sind. Für jede der beiden Schlitzarten können ein, zwei, drei oder vier Schlitze in dem Schlitzbereich 14c vorgesehen sein.

Die Modulöffnung 14 hat in diesem Beispiel eine Abmessung von 8 mm mal 9 mm und eine Tiefe von etwa 250 µm.

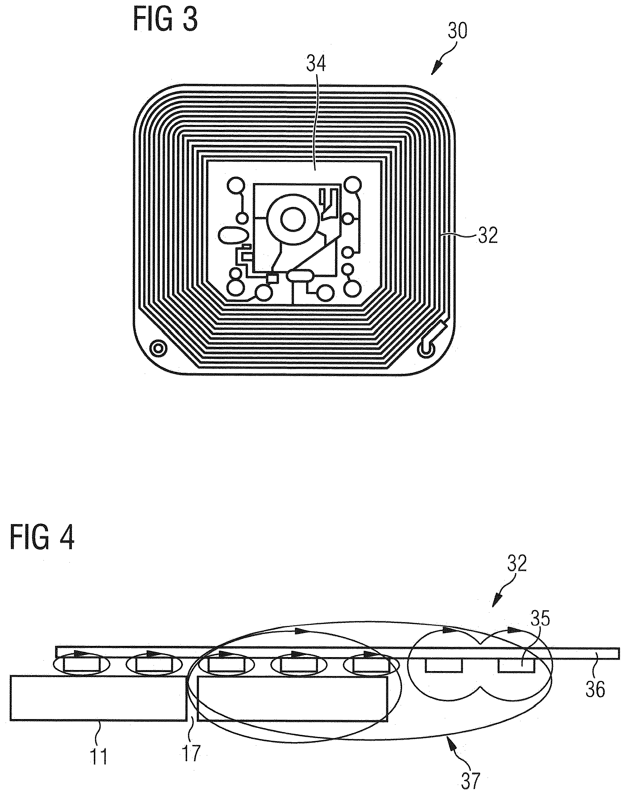

Fig. 3 zeigt eine untere Ansicht des Chipmoduls 30 mit einem zentralen Kontaktbereich 34 für den Anschluss der hier nicht dargestellten Chips oder einer integrierten Schaltung. Die Windungen der Spule 32 umgeben den Kontaktbereich 34. In diesem Beispiel hat die Spule 32 fünfzehn Windungen. Die Spule 32 dient zu der Übertragung von Signalen und/ oder dem Eintrag von Energie für den Chip des Chipmoduls.

Fig. 4 zeigt eine schematische Darstellung des magnetischen Flusses in einem Bereich des Chipmoduls 30. Die Spule 32 ist mit ihren einzelnen Windungen 35 zum Beispiel auf einem Modultape 36 angeordnet.

In diesem Beispiel liegen zwei Windungen in der Modulöffnung 14 und sind somit nicht von der Abdeckung des Metalls betroffen. Bei den nächsten drei Windungen wird durch die Parallelschlitze 17 und/oder die Eckschlitze 16 die Wirbelstrombildung minimiert. Die restlichen beiden Windungen sind von den Dämpfungseigenschaften des Metallkörpers oder der metallischen Schicht 11 komplett betroffen.

Fig. 4 zeigt den Verlauf des magnetischen Flusses 37 um die einzelnen Windungen 35 der Spule 32. Während im Bereich der Modulöffnung 14 oder des Sacklochs 14a eine magnetische Kopplung zwischen den einzelnen Windungen 35 entsteht und somit die Güte der Spule 32 erhöht wird, wird im Bereich des Metallkörpers die Kopplung unterdrückt. Die Ausbildung des magnetischen Flusses 37 ist zudem gestaucht und der magnetische Fluss 37 erzeugt zudem Wirbelströme im Metallkörper. Dies bedeutet, dass die aufgenommene Energie durch die erzeugten Wirbelströme verloren geht.

Durch die Parallelschlitze 17 und/oder die Eckschlitze 16 wird der unterdrückende Einfluss der metallischen Schicht 11 aufgehoben oder zumindest verringert. Hier findet eine magnetische Kopplung zwischen den einzelnen Windungen 35 statt, wodurch der Energieeintrag erhöht wird.

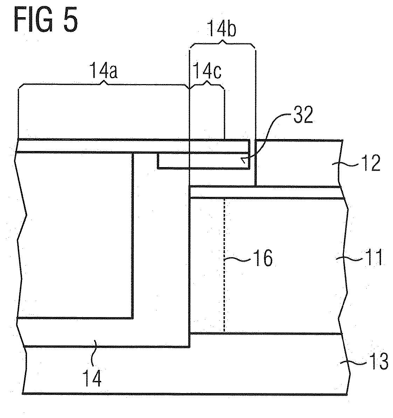

Fig. 5 zeigt ein Detail der Modulöffnung 14 der Schnittdarstellung der Chipkarte 20 aus Figur 1.

Dargestellt ist die Modulöffnung 14 in der Kunststoffschicht 12, der metallischen Schicht 11 und der Kunststoffschicht 13. Die Modulöffnung 14 hat ein Sackloch 14a und einen das Sackloch 14a umgebenden äußeren Bereich 14b, der nur zu einem Teil der Höhe der Kunststoffschicht 12 in dieser ausgenommen ist.

In der metallischen Schicht 11 ist hier ein Eckschlitz 16 dargestellt, der sich ausgehend von einem Eckbereich des Sacklochs 14a in einen Schlitzbereich 14c des äußeren Bereichs 14b hinein erstreckt. Der Eckschlitz 16 erstreckt sich in einem Winkel von 45° zu einem Rand der Modulöffnung 14 und hat eine Länge von 1 mm bis 2 mm. In dem Schlitzbereich 14c des äußeren Bereichs 14b verläuft ebenfalls ein hier nicht dargestellter Parallelschlitz.

Der Schlitzbereich 14c des äußeren Bereichs 14b und ein verbleibender, ungeschlitzter Bereich des äußeren Bereichs 14b sind in diesem Beispiel gleich groß. Der verbleibende, ungeschlitzte Bereich des äußeren Bereichs 14b umgibt dabei den Schlitzbereich 14c des äußeren Bereichs 14b. Es hat sich gezeigt, dass diese Anordnung einen guten Kompromiss zwischen mechanischer Stabilität und elektrischer Leistungsfähigkeit des Chips darstellt.

Weiterhin können der Schlitzbereich 14c des äußeren Bereichs 14b und der verbleibende, ungeschlitzte Bereich des äußeren Bereichs 14b gleich groß sein und die Spule 32 kann das Sackloch 14a der Modulöffnung 14, den Schlitzbereich 14c des äußeren Bereichs 14b und den verbleibenden, ungeschlitzten Bereich des äußeren Bereichs 14b der Modulöffnung 14 zu jeweils einem Drittel überdecken. Auch bei dieser Anordnung hat sich gezeigt, dass sie einen guten Kompromiss zwischen mechanischer Stabilität und elektrischer Leistungsfähigkeit des Chips darstellt.

Die Leistungsfähigkeit des Chips und damit der Chipkarte hängt davon ab, wie schnell ein Mindestbetrag der magnetischen Feldstärke an der Spule 32 aufgebaut werden kann und wie schnell diese ansteigt.

Ab einem bestimmten Mindestbetrag der magnetischen Feldstärke an der Spule 32 ist der Energieeintrag für einen Betrieb des Chips ausreichend. Dieser Mindestbetrag kann zum Beispiel bei 1,5 Ampere pro Meter (A/m) liegen. Je schneller dieser Mindestbetrag erreicht ist, umso eher ist die Chipkarte funktionsbereit. Die Eckschlitze 16 und die Parallelschlitze 17 begünstigen die Ausbreitung des elektromagnetischen Felds zu der Spule 32, so dass der Mindestbetrag der magnetischen Feldstärke an der Spule 32 schnell erreicht werden kann. Zugleich verringern die Eckschlitze 16 und die Parallelschlitze 17 die Ausbildung von Wirbelströmen, was den Energieeintrag in die Chipkarte weiter verbessert.

Der Anstieg der magnetischen Feldstärke an der Spule 32 bestimmt, wann der Chip seine maximale Leistungsfähigkeit erreicht. Üblicherweise ist ein Sättigungsbereich vorhanden, in dem die Leistungsfähigkeit des Chips trotz steigender magnetischer Feldstärke nicht weiter ansteigt. Die Leistungsfähigkeit des Chips kann zum Beispiel in Rechenoperationen pro Zeiteinheit wie einer Sekunde angegeben werden. Auch hier begünstigen die Eckschlitze 16 und die Parallelschlitze 17 den Anstieg des elektromagnetischen Felds an der Spule 32, da die Eckschlitze 16 und die Parallelschlitze 17 eine bessere und schnellere Ausbreitung des elektromagnetischen Felds und damit der magnetischen Feldstärke an der Spule 32 ermöglichen.

Insgesamt wird mit den Eckschlitzen 16 und den Parallelschlitzen 17 und der damit verbundenen kleineren Modulöffnung 14 ein besserer Energieeintrag oder eine bessere Energieeinkopplung erreicht als mit einer größeren Modulöffnung mit den Gesamterstreckung der kleineren Modulöffnung 14 plus den Eckschlitzen 16 und den Parallelschlitzen 17.

Somit kann mittels der kleineren Modulöffnung 14 mit den Eckschlitzen 16 und den Parallelschlitzen 17 eine erhöhte Chipperformance bei gleichzeitig erhöhter mechanischer Stabilität erzielt werden.

## Patentansprüche

1. Kartenkörper (10) für eine Chipkarte (20), umfassend eine Modulöffnung (14) zum Aufnehmen eines Chipmoduls (30) mit einer Spule (32), mit einer metallischen Schicht (11) mit einem Schlitz (15), der sich von einer Außenkante der metallischen Schicht (11) zu der Modulöffnung (14) erstreckt,
und mit einer Kunststoffschicht (12), die auf einer Seite der metallischen Schicht (11) aufgebracht ist,
wobei die Modulöffnung (14) ein in der Kunststoffschicht (12) und der metallischen Schicht (11) ausgenommenes Sackloch (14a) und einen das Sackloch (14a) umgebenden äußeren Bereich (14b) umfasst, der nur zu einem Teil der Höhe der Kunststoffschicht (12) in dieser ausgenommen ist,
**dadurch gekennzeichnet, dass** in der metallischen Schicht (11) in dem äußeren Bereich (14b) mindestens ein weiterer Schlitz (16, 17) vorgesehen ist, wobei sich mindestens ein Eckschlitz (16) in einem Schlitzbereich (14c) des äußeren Bereichs (14b) von einem Eckbereich des Sacklochs (14a) ausgehend erstreckt und sich mindestens ein Parallelschlitz (17) in einem Schlitzbereich (14c) des äußeren Bereichs (14b) parallel zu einer Wand des Sacklochs (14a) erstreckt.

2. Kartenkörper (10) nach Anspruch 1, **dadurch gekennzeichnet, dass** der mindestens eine Eckschlitz (16) sich in einem Winkel von 45° zu einem Rand der Modulöffnung (14) erstreckt.

3. Kartenkörper (10) nach Anspruch 1 oder 2, **dadurch gekennzeichnet, dass** der mindestens eine Eckschlitz (16) eine Länge von 1 mm bis 2 mm aufweist.

4. Kartenkörper (10) nach einem der Ansprüche 1 bis 3, **dadurch gekennzeichnet, dass** eine Länge des mindestens einen Parallelschlitzes (17) mindestens der Länge einer Wand des Sacklochs (14a) entspricht.

5. Kartenkörper (10) nach einem der Ansprüche 1 bis 4, **dadurch gekennzeichnet, dass** ein Abstand des mindestens einen Parallelschlitzes (17) zu einer Wand des Sacklochs (14a) zwischen 0,8 mm und 1 mm beträgt.

6. Kartenkörper (10) nach einem der vorhergehenden Ansprüche, **dadurch gekennzeichnet, dass** auf einer der einen Seite gegenüberliegenden zweiten Seite der metallischen Schicht (11) eine weitere Kunststoffschicht (13) aufgebracht ist und dass sich das Sackloch (14a) der Modulöffnung (14) in die weitere Kunststoffschicht (13) erstreckt.

7. Kartenkörper (10) nach einem der vorhergehenden Ansprüche, **dadurch gekennzeichnet, dass** der Schlitzbereich (14c) des äußeren Bereichs (14b) und ein ungeschlitzter Bereich des äußeren Bereichs (14b) gleich groß sind.

8. Chipkarte (20), umfassend einen Kartenkörper (10) nach einem der Ansprüche 1 bis 7 und ein zumindest teilweise in die Modulöffnung (14) des Kartenkörpers (10) eingebettetes Chipmodul (30) mit einer Spule (32).

9. Chipkarte (20) nach Anspruch 8, **dadurch gekennzeichnet, dass** das Chipmodul (30) einen die Spule (32) tragenden Grundkörper (31) aufweist und dass der Grundkörper (31) in dem äußeren Bereich (14b) der Modulöffnung (14) auf der Kunststoffschicht (12) aufliegt.

10. Chipkarte (20) nach Anspruch 8 oder 9, **dadurch gekennzeichnet, dass** der Schlitzbereich (14c) des äußeren Bereichs (14b) und ein ungeschlitzter Bereich des äußeren Bereichs (14b) gleich groß sind und dass die Spule (32) das Sackloch (14a) der Modulöffnung (14), den Schlitzbereich (14c) des äußeren Bereichs (14b) und den ungeschlitzten Bereich des äußeren Bereichs (14b) der Modulöffnung (14) zu jeweils einem Drittel überdeckt.

## Claims

1. Card body (10) for a chip card (20), comprising a module opening (14) for accommodating a chip module (30) with a coil (32), having a metallic layer (11) with a slot (15) which extends from an outer edge of the metallic layer (11) to the module opening (14),
and having a plastics layer (12) which is applied on one side of the metallic layer (11),
wherein the module opening (14) comprises a blind hole (14a) made in the plastics layer (12) and in the metallic layer (11), and an external region (14b) which surrounds the blind hole (14a) and which is made in the plastics layer (12) only to the extent of a part of the height of said plastics layer (12),
**characterized in that** in the metallic layer (11) in the external region (14b) there is at least one further slot (16, 17), where at least one corner slot (16) extends in a slot region (14c) of the external region (14b), starting from a corner region of the blind hole (14a), and at least one parallel slot (17) in a slot region (14c) of the external region (14b) extends parallel to a wall of the blind hole (14a).

2. Card body (10) according to Claim 1, **characterized in that** the at least one corner slot (16) extends at an angle of 45° to a border of the module opening (14).

3. Card body (10) according to Claim 1 or 2, **characterized in that** the at least one corner slot (16) has a length of 1 mm to 2 mm.

4. Card body (10) according to any of Claims 1 to 3, **characterized in that** a length of the at least one parallel slot (17) corresponds at least to the length of a wall of the blind hole (14a).

5. Card body (10) according to any of Claims 1 to 4, **characterized in that** a distance of the at least one parallel slot (17) to a wall of the blind hole (14a) is between 0.8 mm and 1 mm.

6. Card body (10) according to any of the preceding claims, **characterized in that** a further plastics layer (13) is applied on a second side of the metallic layer (11), opposite the one side, and **in that** the blind hole (14a) of the module opening (14) extends into the further plastics layer (13).

7. Card body (10) according to any of the preceding claims, **characterized in that** the slot region (14c) of the external region (14b) and an unslotted region of the external region (14b) are the same size.

8. Chip card (20) comprising a card body (10) according to any of Claims 1 to 7 and a chip module (30), embedded at least partly into the module opening (14) of the card body (10), with a coil (32).

9. Chip card (20) according to Claim 8, **characterized in that** the chip module (30) has a base element (31) carrying the coil (32) and **in that** the base element (31) lies on the plastics layer (12) in the external region (14b) of the module opening (14).

10. Chip card (20) according to Claim 8 or 9, **characterized in that** the slot region (14c) of the external region (14b) and an unslotted region of the external region (14b) are the same size and **in that** the coil (32) covers a third of each of the blind hole (14a) of the module opening (14), the slot region (14c) of the external region (14b), and the unslotted region of the external region (14b) of the module opening (14).

## Revendications

1. Corps de carte (10) destiné à une carte à puce (20), ledit corps de carte comprenant une ouverture de module (14) destinée à recevoir un module à puce (30) pourvu d'une bobine (32), d'une couche métallique (11) pourvue d'une fente (15) qui s'étend d'un bord extérieur de la couche métallique (11) à l'ouverture de module (14), et d'une couche de matière synthétique (12) qui est appliquée sur une face de la couche métallique (11), l'ouverture de module (14) comprenant un trou borgne (14a) qui est ménagé dans la couche de matière synthétique (12) et la couche métallique (11) et une zone extérieure (14b) qui entoure le trou borgne (14a) et qui est ménagée dans la couche de matière synthétique (12) sur seulement une partie de la hauteur de celle-ci,
**caractérisé en ce qu'**au moins une autre fente (16, 17) est prévue dans la couche métallique (11) dans la zone extérieure (14b), au moins une fente de coin (16) s'étendant dans une zone à fente (14c) de la zone extérieure (14b) depuis une zone de coin du trou borgne (14a) et au moins une fente parallèle (17) s'étendant dans une zone à fente (14c) de la zone extérieure (14b) parallèlement à une paroi du trou borgne (14a).

2. Corps de carte (10) selon la revendication 1, **caractérisé en ce que** l'au moins une fente de coin (16) s'étend suivant un angle de 45° par rapport à un bord de l'ouverture de module (14).

3. Corps de carte (10) selon la revendication 1 ou 2, **caractérisé en ce que** l'au moins une fente de coin (16) a une longueur de 1 mm à 2 mm.

4. Corps de carte (10) selon l'une des revendications 1 à 3, **caractérisé en ce qu'**une longueur de l'au moins une fente parallèle (17) correspond au moins à la longueur d'une paroi du trou borgne (14a).

5. Corps de carte (10) selon l'une des revendications 1 à 4, **caractérisé en ce qu'**une distance entre l'au moins une fente parallèle (17) et une paroi du trou borgne (14a) est comprise entre 0,8 mm et 1 mm.

6. Corps de carte (10) selon l'une des revendications précédentes, **caractérisé en ce qu'**une autre couche de matière synthétique (13) est appliquée sur une deuxième face de la couche métallique (11) opposée à une face et **en ce que** le trou borgne (14a) de l'ouverture de module (14) s'étend jusque dans l'autre couche de matière synthétique (13).

7. Corps de carte (10) selon l'une des revendications précédentes, **caractérisé en ce que** la zone à fente (14c) de la zone extérieure (14b) et une zone sans fente de la zone extérieure (14b) sont de même dimension.

8. Carte à puce (20) comprenant un corps de carte (10) selon l'une des revendications 1 à 7 et un module à puce (30) pourvu d'une bobine (32) et au moins partiellement noyé dans l'ouverture de module (14) du corps de carte (10).

9. Carte à puce (20) selon la revendication 8, **caractérisée en ce que** le module à puce (30) comporte un corps de base (31) portant la bobine (32) et **en ce que** le corps de base (31) est en appui sur la couche de matière synthétique (12) dans la zone extérieure (14b) de l'ouverture de module (14).

10. Carte à puce (20) selon la revendication 8 ou 9, **caractérisée en ce que** la zone à fente (14c) de la zone extérieure (14b) et une zone sans fente de la zone extérieure (14b) sont de même dimension et **en ce que** la bobine (32) recouvre le trou borgne (14a) de l'ouverture de module (14), la zone à fente (14c) de la zone extérieure (14b) et la zone sans fente de la zone extérieure (14b) de l'ouverture de module (14) à chaque fois sur un tiers.
